# EUROPEAN PATENT APPLICATION

(11) **EP 1 796 199 A1**
(43) Date of publication of application: **13.06.2007**
(21) Application number: 05026704.6
(22) Date of filing: 07.12.2005
(51) Int. Cl.: H01M 8/24, H01M 8/04, H01M 16/00, H01M 8/10, H01M 8/00

(54) **Electric power cell**

(71) Applicant: Siemens Aktiengesellschaft Österreich, 1210 Wien (AT)
(72) Inventor: Borza, Paul Nicolae, 500365 Bucarest (RO)
(74) Representative: Berg, Peter

(57) **Abstract**

The invention concerns an electric power cell comprising at least one fuel cell (4); at least one battery (3), at least one capacitor(2), controlling means (1) and switching means (5,6,7).

With the invention it is possible to built up power sources with different characteristics.

## Description

### Field of the invention.

The invention relates to an Electric Power Cell and to a Method for operating such Electric Power Cells

### Prior Art

Nearly all modern devices as for example computers, telephones, or food processors need electric power for their proper function.

So, especially the supply of mobile devices with electric power is a key problem for the technicians.

According to the state of the art, the power supply of mobile devices is build up with rechargeable batteries. In order to overcome the known disadvantages of these batteries, it is also discussed to use fuel cells.

Fuel cells are very useful as power sources in remote locations, such as spacecraft, remote weather stations, large parks, rural locations, and in certain military applications. A fuel cell system running on hydrogen can be compact, lightweight and has no major moving parts.
A near-term application is combined heat and power (CHP) for office buildings and factories. This type of system generates constant electric power (selling excess power back to the grid when it is not consumed), and at the same time produce hot air and water from the waste heat. Phosphoric-acid fuel cells (PAFC) comprise the largest segment of existing CHP products worldwide and can provide combined efficiencies close to 80% (45-50% electric + remainder as thermal).
Molten-carbonate fuel cells have also been installed in these applications, and Solid-oxide fuel cell prototypes exist.

Because fuel cells have a high cost per kilowatt, and because their efficiency decreases with increasing power density, they are usually not considered for applications with high load variations. In particular, they are not suited for energy storage systems in small and medium scale. An electrolyzer and fuel cell would return less than 50 percent of the input energy (this is known as round-trip efficiency), while a much cheaper lead-acid battery might return about 90 percent.

### Summary of the invention

It is object of the invention to provide an Electric Power Cell which overcomes the restrictions of the state of the art.

According to the invention, this object is achieved by an Electric Power Cell comprising
- at least one fuel cell
- at least one battery
- at least one capacitor
- controlling means
- switching means

An electric power cell is preferred, in which one capacitor is connected via electronic switches to the fuel cell and the battery and in which the power cell is connected to an power output via further switching means and in which the switching means are controlled by controlling means which are connected to a data bus.

An preferable power sell comprises serial output means SB+, SB- and parallel output means PB+, PB-.

The invention can be used in a very preferable manner, when a plurality of power cells is connected and controlled in the way that an electric power source is built up.

An preferable procedure for recharging an electric power cell comprises the following steps:
- Insulation of power cell by switching means
- Pumping of charge from battery into the capacitor at a limit initial established
- Disconnecting of capacitor from battery
- Connecting the power cell, respectively the capacitor to the output network
- Connecting the battery at fuel cell in order to charge again the battery at maximum level in order to be able to assure the next charging of capacitor
- Control the supplying process at the fuel cell level by controlling the methanol access into the cell, and preserving by control the variation of temperature in initial settled range.

### Brief description of the drawings

Fig 1 shows the structure of an electric power cell according to the invention
Fig. 2 shows the structure of the preferred connecting means
Fig.3 shows an example of a complex power source, built up with a plurality of power cells
Fig.4 and 5 show different stages of a power source comprising 4 cells.

### Detailed description of the preferred embodiments

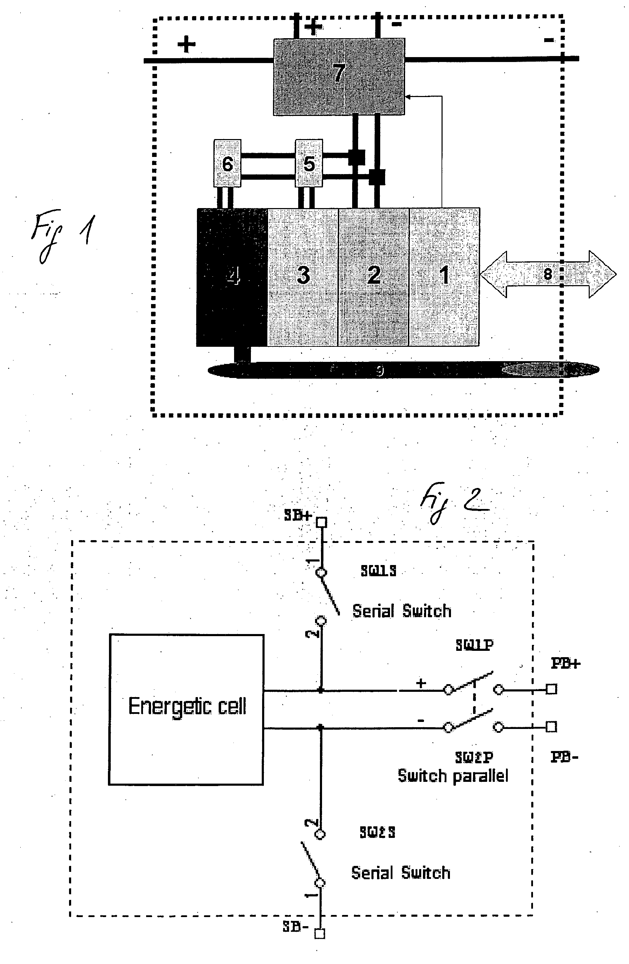

The electric power cell of Fig. 1 comprises a capacitor 2, which is connected via electronic switches 6,5 to a fuel cell 4 and a battery 3 and in which the power cell is connected to an power output + - via further switching means 7 and in which the switching means 5,6,7 are controlled by controlling means 1 which are connected to a data bus 8.

The fuel cell is preferably from the type of a DMFC- Direct Methanol Fuel Cell.

An preferable power sell comprises serial output means SB+, SB- and parallel output means PB+, PB-.

The switches are build up with known elements in VMOS or IGBT-technology.

The controlling means are built up with microcontrollers, which control the function of the other elements. So a typical workflow of a power cell is as follows:
- Insulation of cell that must be "revitalized" by switching means 7
- Pumping of charge from battery 3 into the capacitor 2 at a limit initial established
- Disconnecting of capacitor 2 from battery 3
- Connecting the power cell, respectively the capacitor 2 to the output network +-
- Connecting the battery 3 at fuel cell 4 in order to charge again the battery 3 at maximum level in order to be able to assure the next charging of capacitor 2
- Control the supplying process at the fuel cell level by controlling the methanol access 9 into the cell 4, and preserving by control the variation of temperature in initial settled range.

A key element of the power cell is the capacitor which has to be dimensioned in an appropriate manner.

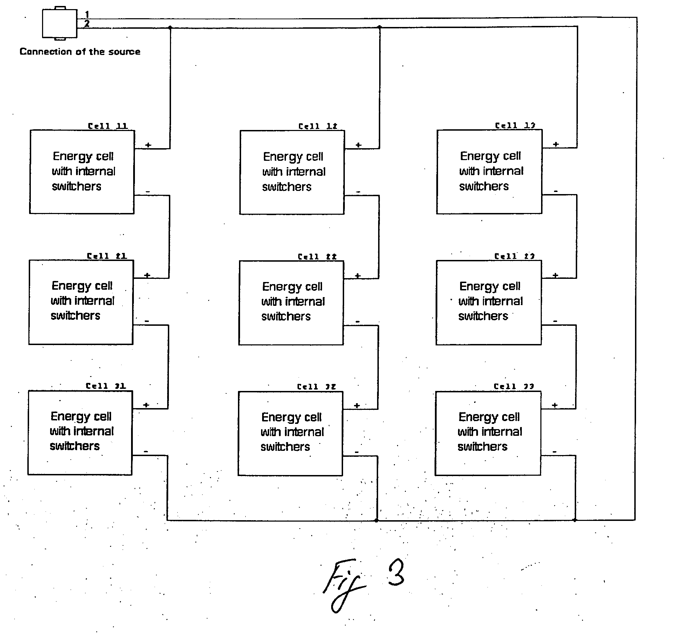

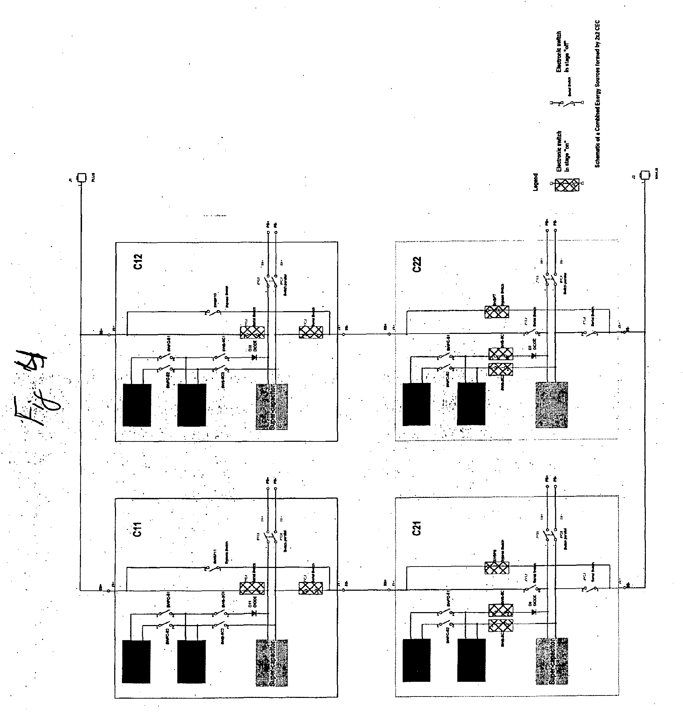

In order to fulfill requirements, which exceed the capability of a single power cell, it is possible to combine a plurality of cells to a power source as it is shown in Fig. 3. For this purpose the power cells comprise serial output means SB+, SB- and parallel output means PB+, PB- as shown in Fig.2.

In this case it is necessary, that the function of a power cell is aligned with the other cells, or in other words, the controlling means of the cells have to work together to perform the function of the combined energy source.

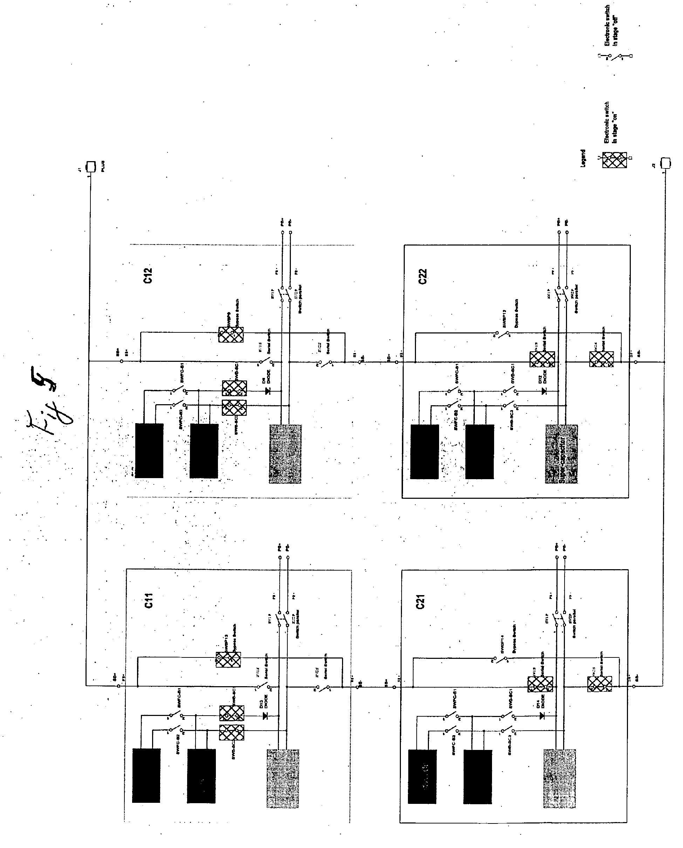

Fig.4 and Fig. 5 show 2 different stages of a source comprising four power cells C11, C12, C21, C22.

The key element of the power cells, the capacitor is connected by assembly of external switches SW1S, SW2S, SW1P, SW2P and SWBP into the source. Additional internal switches SWB-SC1, and SWB-SC2 assure the recharging of the capacitor under the control of a microcontroller that is not shown in Fig.3 and Fig.4.

The further internal switches SWFC-B1 and SWFC-B2 under the same controller recharge the battery if this charging process is necessary.

The external switching system comprises five switches. Two of them SW1S and SW2S are used for a serial connection of the power cell into the source if it is demanded. Two second external switches SW1P and SW2P are used for parallel connection of power cell into the source. The fifth external switch SWBP is used to bypass the power cell when it is insulated.

In the shown example, the first and second power cell C11, C 12 and the third and fourth power cell C21, C22 are handled simultaneously. Fig 3 shows a situation, where the first and second power cell C11, C 12 are connected directly to the output of the source, the capacitors of these cells are discharged.

Concurrently the third and fourth power cell C21, C22 are disconnected form their output, while internal the capacitors are connected to the batteries and are loaded.

Fig 4 shows the situation where the third and fourth power cell C21, C22 are connected directly to the output of the source, the capacitors of thess cells are discharged, while the first and second power cell C11, C 12 are disconnected form their output, while internal the capacitors are connected to the batteries and are loaded.

It has to be mentioned, that the invention allows it, by combination of a plurality of power cells, and appropriate controlling of this power cells, especially of the internal and external switches of this cells to realize power sources which meet a broad variety of requirements.

## Claims

1. An electric power cell comprising at least one fuel cell (4); at least one battery (3), at least one capacitor(2), controlling means (1) and switching means (5, 6, 7) .

2. An electric power cell according to claim 1, in which one capacitor (2) is connected via electronic switches (6,5)to the fuel cell (4)and the battery (3) and in which the power cell is connected to an power output (+ -) via further switching means(7) and in which the switching means (5,6,7) are controlled by controlling means (1) which are connected to a data bus (8).

3. An electric power cell according to claim 1 or 2, which comprises serial output means SB+, SB- and parallel output means PB+, PB-.

4. A plurality of power cells according to one of claims 1 to 3, connected and controlled in the way that an electric power source is built up.

5. An procedure for recharging an electric power cell according to one of claims 1 to 3, comprising the following steps:
- Insulation of power cell by switching means (7)
- Pumping of charge from battery (3) into the capacitor (2) at a limit initial established
- Disconnecting of capacitor (2) from battery (3)
- Connecting the power cell, respectively the capacitor (2) to the output network (+-)
- Connecting the battery (3) at fuel cell (4) in order to charge again the battery (3) at maximum level in order to be able to assure the next charging of capacitor (2)
- Control the supplying process at the fuel cell level by controlling the methanol access (9) into the cell (4), and preserving by control the variation of temperature in initial settled range.
